# EUROPEAN PATENT APPLICATION

(11) **EP 1 271 851 A2**
(43) Date of publication of application: **02.01.2003**
(21) Application number: 02254353.2
(22) Date of filing: 21.06.2002
(51) Int. Cl.: H04L 12/28, H04L 29/06

(54) **Method and apparatus for selecting a communication channel**

(30) Priority: 22.06.2001 GB 0115379
(71) Applicant: Inmarsat Ltd., London EC1Y 1AX (GB)
(72) Inventor: Feldman, Howard, Edgware, Middlesex, HA8 8RT (GB); Lynam, Henry, Castleknock, Dublin 15 (IE)
(74) Representative: Cross, James Peter Archibald

(57) **Abstract**

A software module performs selection of circuit switched or packet switched mode for a communications session according to stored mode preference data representing the channel requirements and channel usage of an application. At step 80 the software module monitors usage of a connection during the communications session to determine the transport efficiency of each current session. This information is used to modify the stored mode preference data.

## Description

The present invention relates to a communication method and apparatus, particularly for selecting from one of a plurality of communication modes.

In known communication methods, a call from a communications terminal can be routed through any one of a plurality of different service providers, each of which may have a different tariff depending on the called destination and time of day. 'Least cost routing' may used to select, preferably automatically, the cheapest service provider for each call.

Different communication modes may also be available to a communications terminal. For example, the General Packet Radio System (GPRS) and the High Speed Circuit Switched (HSCS) services have been standardised as enhancements to the GSM terrestrial cellular standard, and handsets may be provided with both enhancements. In the satellite communications field, Inmarsat Ltd. have recently demonstrated a mobile internet protocol (IP) service as well as a circuit switched mobile ISDN service, both of which may be available to Inmarsat mobile earth stations (MES's). Packet-switched networks allow users to be billed on a per-byte basis, while circuit switched services are usually charged on a per-minute basis. However, the user cannot easily judge which service will be cheaper or more efficient for a particular application.

The document JP-A-3045053 describes an ISDN terminal which selects the cheaper of packet and circuit switched modes depending on the quantity of data to be sent. However, this technique requires *a priori* knowledge of how much data is to be sent. In most types of data communication, the amount of data to be sent is not known at the time of setting up a connection. Therefore this technique is only suitable for selecting the most efficient communications mode in a few unusual cases.

According to one aspect of the present invention, there is provided a method of selecting one of a plurality of possible communications modes for a communications session, comprising: storing an index of communication mode efficiency or usage factors according to communications session type; identifying the type of a new communications session; and selecting one of said communications modes for the new communications session according to said stored efficiency or usage factors.

According to another aspect of the present invention there is provided a communications terminal capable of selecting one of a plurality of communications channel modes for a communications session initiated by the communications terminal, the communications terminal including:
a store for storing information relating to channel usage according to type of communications session; and
a processor for identifying the type of an initiated communications session and selecting said one communications channel mode on the basis of said stored information relating to the type of the initiated communications session.

The efficiency or usage factors may be determined by historical efficiency or usage data for a user initiating that session and/or for other users of that session type.

The selection may be made automatically, or information derived from the relevant efficiency or usage factor may be presented to the user, who then selects one of said modes.

The communications modes may correspond to different channel types. The channel types may include circuit-switched and packet-switched types.

According to another aspect of the present invention, there is provided a method of creating a database of communication mode efficiency or usage factors according to communications session type, including: identifying the type of a communications session; monitoring usage of one or more communications ports during that communications session, and deriving therefrom an efficiency or usage factor for that communications session type.

According to yet another aspect of the present invention, there is provided a apparatus for creating or modifying a database of communication mode usage according to communications session type, including:
a processor for identifying a current communications session; monitoring usage of one or more communications channels during the identified communications session and creating or modifying said database on the basis of said monitored usage.

Specific embodiments of the present invention will now be described with reference to the accompanying drawings, in which:-
Fig. 1 is a diagram of wireless terminal equipment, comprising a computer and wireless interface, connected to packet switched and circuit switched networks; and
Fig. 2 is a flow chart of the operation of a software module running on the computer.

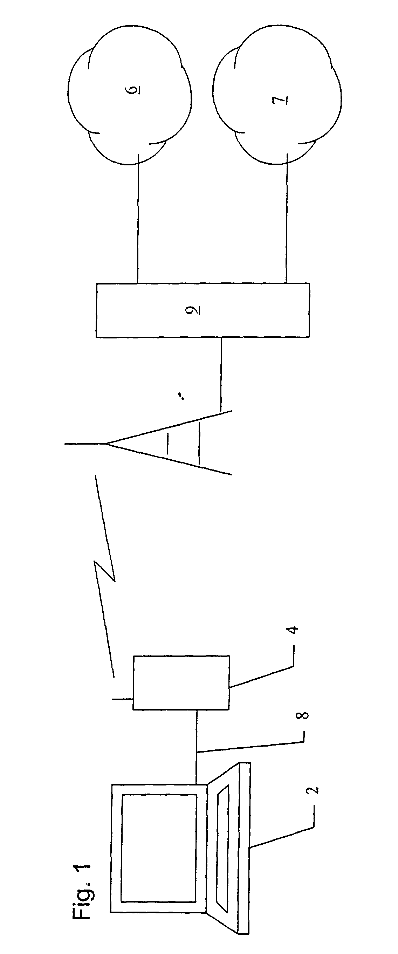

As shown in Figure 1, a general purpose computer 2 is connected via a wireless interface 4 and a wireless link to a base station 9 connectable to a packet switched network 6 and a circuit switched network 7. In one example, the packet switched network 6 is a GPRS network, as defined in the standard 'Digital Cellular Telecommunications System (Phase 2+), General Packet Radio Service, Service Description, Stage 1', GSM 02.60 v. 6.2.1, August 1999, and the circuit switched network 7 is an HSCS network, as defined in the standard 'Digital Cellular Telecommunications System (Phase 2+), High Speed Circuit Switched Data, Service Description, Stage 1,' GSM 02.34 v. 6.0.0, January 1999.

The wireless interface 4 exchanges data with the computer 2 via a connection 8, which may be a serial port connection over a cable or an infrared port connection. In this example, the wireless interface may be a GPRS- and HSCS-enabled mobile handset. Alternatively, the wireless interface 4 may be an expansion card installed within the computer 2 or the wireless interface 4 may be integrated within the computer 2 in the form of a PDA device or the like.

In an alternative embodiment, the wireless interface 4 may be an Inmarsat™ M4/IPDS (Inmarsat Packet Data Service) mobile earth station (MES) which provides an ISDN connection over a full duplex 64 kbps wireless channel to an earth station (LES) interconnected to the terrestrial ISDN and an internet protocol (IP) connection over a shared wireless channel.

As a matter of convenience, the circuit switched and packet switched communications modes may be handled by the same wireless interface so as to avoid duplicating the RF stage and to allow sharing of baseband components, but there may alternatively be separate interfaces for the two modes, each connected to the same computer 2.

The computer 2 is capable of running communications applications for voice, fax, video and other data communications. As an example, the computer may be running applications under Windows 98™ or Windows 2000™ which use the Windows dial-up networking (DUN) service to access the communications networks via suitable driver software configured for the wireless interface 4.

An embodiment of the present invention will now be described in the form of a software module which forms part of the driver software running on the computer 2. The software module may be stored on a carrier, such as a data CD or floppy disc, or downloaded over a communications channel, and installed on the computer 2. The software module performs selection of circuit switched or packet switched mode for each communications session, according to stored mode preference data representing the channel requirements and channel usage of each application. More generally, a processor (not shown) of the computer 2 can carry out instructions included in the software module as well as conventional processing for applications running on the computer 2.

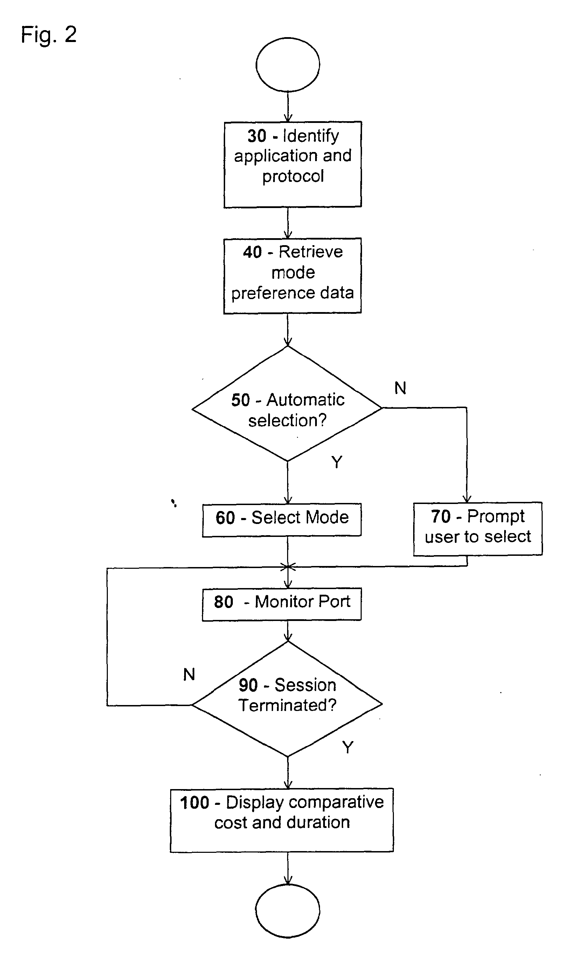

The module is activated by the initiation of a communications session by an application running on the computer 2 invoking the DUN service and follows a procedure as shown in Figure 2. At step 30, the module identifies the application which invoked DUN and the communications protocol to be used. At step 40, the module retrieves the mode preference data for that application and protocol. The data can be retrieved from a store, for example on the hard drive (not shown) of the computer 2. At step 50, the module determines whether automatic or user selection mode has been set. In the case of automatic selection, at step 60 the module determines from the mode preference data which communications mode, in this case circuit or packet mode, is to be used for that session and commands the wireless interface 4 to set that mode. In the case of user selection, at step 70 the module displays to the user information relating to the use of each possible mode for that session. For example, the module may indicate a preferred mode to the user. The user then uses standard input techniques to select a mode.

At step 80 the software module monitors usage of the connection 8 during the communications session to determine the transport efficiency of each current session, for example by monitoring the data flow through the port connected to the connection 8. This may be done by monitoring the port directly, by monitoring the data flow to and from the port driver, or by monitoring the Windows registry which stores temporarily data sent to and from the port. The monitoring may identify the bandwidth usage by each application and may determine the proportion of the available bandwidth being used by a circuit switched connection and the bandwidth usage by a packet switched connection. This information is used to modify the stored mode preference data.

When a session is terminated at step 90, the module calculates the duration of the terminated session and the cost to the user, based on stored tariff information and duration and/or bandwidth usage during the session, and displays this information to the user. The module may also calculate and display the comparative cost and duration of that session if an alternative communications mode had been selected, and prompt the user to indicate a preferred mode for subsequent sessions by that application, which is used to modify the mode preference data. The module may also prompt the user to indicate whether the terminated communications session was too slow for the user's requirements; if so, the mode preference data is modified in favour of subsequent selection of circuit switched mode.

The software module may include an interactive configuration routine in which the user is prompted for preferences in their use of detected applications, for example via a user interface (not-shown) of the computer 2, such as whether speed is more important than cost or, in the case of a web browser application, whether the user is likely to move slowly or quickly between pages. These preferences create or modify the stored mode preference data. If the configuration routine has not yet been run, default preferences may be set.

As an additional or alternative feature, the software module may include a mode preference data download feature, in which files on the efficiency of use of the different modes by different applications are downloaded from a remote server using an http or ftp application. The files may be updated periodically on the remote server to include information on the efficiency of new applications or to reflect the results of further testing of existing applications. Additionally, the software module may upload to the remote server information on the use of the different modes by the different applications run on the computer, which information is used by the remote server to modify the data downloaded to other computers.

In an example of the mode preference data, each record may comprise the fields shown below in Table 1:

**Table 1 -**

| Mode Preference Data Record | |
|---|---|
| Field | Description |
| Application | Text or other unique identifier |
| Transport Protocol | Text or other unique identifier |
| Average circuit usage efficiency | Percentage |
| Average bandwidth requirement | Value, kbps |
| User preference | Packet/Circuit |
| Fixed Mode | Packet/Circuit/None |

The fixed mode field allows the software module to fix the mode used by some applications, for example telephony or video telephony in which packet mode would introduce unacceptable latency and which therefore require circuit mode.

The software module also stores current tariff information for circuit and packet switched modes, which may vary according to the time of day. Updated tariffs may be downloaded periodically. The software module uses the tariff information to calculate the cost of a session and optionally to select between packet and circuit mode, based on the average circuit usage efficiency and average bandwidth requirement.

The software module may also store statistical information on the availability of circuit switched channels and the bandwidth availability of packet switched channels. If the average bandwidth required by an application is greater than the likely bandwidth available on a packet switched channel at time when a session is initiated, the module may then select a circuit switched mode.

The software module may also take into account more complex billing arrangements, such as the provision of a certain quantity of inclusive minutes or bandwidth usage in a given period. For example, if the inclusive minutes have all been used but inclusive packet mode bandwidth is still available, the module may select packet mode if possible.

In an alternative embodiment, the software module may switch between packet and circuit modes during a session according to current usage of the channel by the application. For example, a web browser may be idling while the user is reading material already received, in which case packet mode is preferred, but may then begin a large download, during which circuit mode is preferred. Switching between modes requires a proxy connected to the remote application server to support mode selection changes.

The above embodiment has been described with reference to the selection of circuit and packet modes, but the present invention is applicable to selection between other communications modes. The present invention is not limited to the use of GPRS, HSCS, or Inmarsat protocols. Moreover, it is not essential that the computer or wireless interface be mobile.

The above embodiments are described purely by way of example and other alternatives may be envisaged within the scope of the present invention, as defined by the appended claims.

## Claims

1. A method of selecting one of a plurality of communications channel modes for a communications session initiated by a communications terminal, including:
storing information relating to channel usage according to type of communications session;
identifying the type of an initiated communications session; and selecting said one communications channel mode on the basis of said stored information relating to the type of the initiated communications session.

2. A method according to claim 1, wherein information is stored relating to channel usage in previous communications sessions.

3. A method according to claim 1 or claim 2, including modifying said stored data on the basis of previous usage of said channel modes.

4. A method according to any preceding claim, including monitoring usage of said channel modes by the communications terminal.

5. A method according to claim 4, wherein information is stored relating to said monitored usage.

6. A method according to any preceding claim, including receiving usage information over a communications channel.

7. A method according to any preceding claim, wherein said usage information relates to usage of said channel modes by communications terminals other than said communications terminal.

8. A method according to any preceding claim, wherein said stored information is created or modified according to user input.

9. A method according to any preceding claim, including changing the selection of channel mode during said session, on the basis of current channel usage of said session.

10. A method according to any preceding claim, in which the communications channel modes comprise circuit and packet switched modes.

11. A method according to claim 10, in which the channel usage information is indicative of efficiency of usage of circuit switched mode according to type of communications session.

12. A method according to claim 10 or 11, in which the channel usage information is indicative of efficiency of usage of circuit switched mode according to type of communications session.

13. A method according to any preceding claim, including the step of indicating to the user said stored information relating to the type of the initiated communications session; wherein said selecting step includes receiving a selection input from the user.

14. A method according to any preceding claim, in which said type includes a communications application type.

15. A method according to any preceding claim, in which said type includes a communications protocol type.

16. A method according to any preceding claim, wherein the communications channel includes a wireless link to the terminal.

17. A communications terminal capable of selecting one of plurality of communications channel modes for a communications session initiated by the communications terminal, the communications terminal including:
a store for storing information relating to channel usage according to type of communications session; and
a processor for identifying the type of an initiated communications session and selecting said one communications channel mode on the basis of said stored information relating to the type of the initiated communications session.

18. A communications terminal according to claim 17, wherein the store stores information relating to channel usage in previous communications sessions.

19. A communications terminal according to claim 17 or claim 18, wherein the processor modifies said stored data on the basis of previous usage of said channel modes.

20. A communications terminal according to any of claims 17 to 19, wherein the processor monitors said usage of said channel modes by the communications terminal.

21. A communications terminal according to claim 20, wherein the store stores information relating to said monitored usage.

22. A communication terminal any of claims 17 to 21, wherein the terminal receives usage information over a communications channel.

23. A communications terminal according to any of claims 17 to 22, wherein said usage information relates to usage of said channel modes by communications terminals other than said communications terminal.

24. A communications terminal according to any of claims 17 to 23, including an user interface by which said stored information is created or modified according to user input.

25. A communications terminal according to any of claims 17 to 24, wherein the processor changes the selection of channel mode during said session, on the basis of current channel usage of said session.

26. A communications terminal according to any of claims 17 to 25, in which the communications channel modes comprise circuit and packet switched modes.

27. A communications terminal according to claim 26, in which the channel usage information is indicative of efficiency of usage of circuit switched mode according to type of communications session.

28. A communications terminal according to claim 26 or 27, in which the channel usage information is indicative of bandwidth usage of packet switched mode according to type of communications session.

29. A communications terminal according to any of claims 17 to 28, wherein the terminal indicates to the user said stored information relating to the type of the initiated communications session and the processor selects said one communications channel mode by receiving a selection input from the user.

30. A communications terminal according to any of claims 17 to 29, in which said type includes a communications application type.

31. A communications terminal according to any of claims 17 to 30, in which said type includes a communications protocol type.

32. A communications terminal according to any of claims 17 to 31, including a wireless link between the terminal and communications channel.

33. A method of creating or modifying a database of communication mode usage according to communications session type, including:
identifying a current communications session;
monitoring usage of one or more communications channels during the identified communications session; and
creating or modifying said database on the basis of said monitored usage.

34. An apparatus for creating or modifying a database of communication mode usage according to communications session type, including:
a processor for identifying a current communications session, monitoring usage of one or more communications channels during the identified communications session and creating or modifying said database on the basis of said monitored usage.

35. A computer program arranged to carry out the method of any of claims 1 to 16 or 33 when executed on a suitable system.

36. A computer program according to claim 35, when recorded on a carrier.
